# EUROPEAN PATENT APPLICATION

(11) **EP 2 367 361 A2**
(43) Date of publication of application: **21.09.2011**
(21) Application number: 11152500.2
(22) Date of filing: 28.01.2011
(51) Int. Cl.: H04N 13/00

(54) **3D glasses chargeable by remote controller, remote controller and charging system using the same**

(30) Priority: 15.03.2010 KR 20100022749
(71) Applicant: Samsung Electronics Co., Ltd., Gyeonggi-do (KR)
(72) Inventor: Agarwal, Pankaj, Gyeonggi-do (KR); Hwang, Min-cheol, Seoul (KR)
(74) Representative: Hewett, Jonathan Michael Richard

(57) **Abstract**

Three-dimensional (3D) glasses which are capable of being charged by a remote controller, the remote controller, and a charging system using the same are provided. The charging system includes: a remote controller and 3D glasses, wherein the remote controller generates a signal for wirelessly charging the 3D glasses, and the 3D glasses are charged by receiving the generated signal from the remote controller and generating power using the received signal. Therefore, the 3D glasses may be charged while being used, thereby improving a user convenience.

## Description

The present invention relates to three-dimensional (3D) glasses chargeable by a remote controller, the remote controller, and a charging system using the same, and more particularly, to 3D glasses which are charged by a remote controller which is connected over wire or wirelessly, the remote controller, and a charging system using the same.

With the development of three-dimensional (3D) technology, various devices to which 3D image technology is applicable have emerged. Such devices include a 3D image producing device such as a 3D camera, a 3D television (TV) which displays a 3D image, and 3D glasses which produce a stereographic image.

Recently, various entertainment content such as movies and documentaries produced using 3D techniques are drawing worldwide attention. In particular, the movie "Avatar," which was filmed using 3D technology, attracted a record number of audiences. In addition, the competition between entertainment providers that develop 3D contents has recently become intense, and manufacturers that produce 3D image display devices are eager to develop the relevant technique.

Recently, 3D images are being broadcast to 3D image display devices. Such 3D image display devices are being provided to users and, thus, the users are demanding high quality 3D images and convenience in viewing the 3D images.

A 3D system which allows a user to view a 3D image in his or her room includes a 3D image display device such as a 3D TV and 3D glasses which operate interactively with the 3D image display device to provide a stereographic image. The 3D image display device and the 3D glasses provide a user with a stereographic image in a limited space by operating interactively with each other. Accordingly, power needs to be continuously supplied to drive both the 3D image display device and the 3D glasses.

However, if the 3D glasses are continuously connected to a power supplying unit to receive power, a user may experience inconvenience since the connection between the 3D glasses and the power supplying unit restricts the user's movement. If the 3D glasses are charged in advance, the user inconvenience may be reduced. However, if the 3D glasses are discharged while a user views a 3D image, for example, if a movie lasts more than two hours, the 3D glasses should be recharged, and this causes inconvenience viewing the 3D image.

Exemplary embodiments of the present invention provide three-dimensional (3D) glasses which are chargeable over wire or wirelessly while being used. Exemplary embodiments also provide a remote controller which charges an external device operating interactively with an image display device.

According to an aspect of the present invention, there is provided 3D glasses, including a power generating unit which receives a signal generated by a remote controller and generates power using the received signal; and a charging unit which charges the generated power.

The power generating unit may include a second coil which magnetically contacts a first coil of the remote controller, and generates the power using an induced electromotive force generated by the second coil.

The power generating unit may include a second resonator which wirelessly receives a resonant wave generated by the remote controller.

A resonance frequency of the second resonator may correspond to a resonance frequency of a first resonator of the remote controller.

The charging unit may be a rechargeable battery or a super capacitor.

The 3D glasses may further include a voltage regulating unit which adjusts a voltage of a rectified power.

The 3D glasses may further include a rectifying unit which rectifies the power generated by the power generating unit, wherein the charging unit may charge the power which is rectified by the rectifying unit.

The power generating unit may be wirelessly connected to a connection unit of the remote controller, and may receive power from the remote controller through the connection unit.

The 3D glasses may further include: a determination unit which determines a charge state of the 3D glasses; and a warning unit which warns a user about a current charge state when the current charge state of the 3D glasses is below a predetermined charge level.

The warning may include at least one of a warning which is output through a sound signal and a warning which is displayed on lenses of the 3D glasses.

The 3D glasses may further include a signal requesting unit which requests the remote controller to generate a signal for generating power when the current charge state of the 3D glasses is below a predetermined charge level, wherein the power generating unit may receive the generated signal from the remote controller in response to the request.

The power generating unit may receive the signal generated by the remote controller while the 3D glasses operate, and may generate the power while the 3D glasses operate.

According to another aspect of the present invention, there is provided a remote controller, including: an input unit which receives a user's input to remotely control a display device; a signal generating unit which generates a signal for remotely controlling the display device based on the user's input through the input unit; and a power induction unit which induces an external device to generate power.

The power induction unit may include a first coil which is magnetically connected to a second coil of the external device, wherein the second coil to generate an induced electromotive force using the first coil.

The power induction unit may include a first resonator which generates a resonant wave to generate the power through a second resonator of the external device.

A resonance frequency of the second resonator for reception may correspond to a resonance frequency of the first resonator.

The remote controller may further include: a power supplying unit which supplies power to the external device; and a connection unit which connects the external device to the remote controller over wire, wherein the power supplying unit may supply the power to the external device connected to the remote controller through the connection unit.

The external device may operate interactively with the display device.

The display device may be a 3D display device, and the external device may be 3D glasses.

The remote controller may be a television (TV) remote controller.

The remote controller may be a mobile phone.

According to another aspect of the present invention, there is provided a charging system, including: a remote controller which remotely controls a display device; and 3D glasses which operate interactively with the display device, wherein the remote controller may generate a signal for wirelessly charging the 3D glasses, and wherein the 3D glasses may be charged by receiving the generated signal from the remote controller and generating power using the received signal.

According to another aspect of the present invention, there is provided a remote controller for controlling an image display device, the remote controller including: a connection unit which connects to an external device; and a power supplying unit which supplies power to the connected external device, wherein the external device is different from the image display device and operates interactively with the image display device.

According to another aspect of the present invention, there is provided a method of supplying power to 3D glasses for use with an image display device, the method including: receiving, by the 3D glasses, a signal generated by a remote controller; and generating, by the 3D glasses, the power using the received signal.

The above and/or other aspects will be more apparent by describing certain exemplary embodiments with reference to the accompanying drawings, in which:
FIG. 1 is a view provided to explain a principle of realizing a three-dimensional (3D) image according to an exemplary embodiment;
FIG. 2 is a view illustrating an environment where a 3D image is provided according to an exemplary embodiment;
FIG. 3 is a block diagram illustrating 3D glasses to which a charging method is applied according to an exemplary embodiment;
FIG. 4 is a block diagram illustrating a remote controller 500 to which a charging method is applied according to an exemplary embodiment;
FIG. 5 is a view illustrating a wireless charging system according to an exemplary embodiment;
FIG. 6A is a view provided to explain a wireless charging method according to an exemplary embodiment;
FIG. 6B is a view provided to explain a wireless charging method according to another exemplary embodiment;
FIG. 7 is view illustrating 3D glasses and a remote controller which use a wired charging method according to an exemplary embodiment; and
FIG. 8 is a view provided to explain a charging method according to an exemplary embodiment.

Certain exemplary embodiments will now be described in greater detail with reference to the accompanying drawings. In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail. Furthermore, expressions such as "at least one of," when preceding a list of elements, modify the entire list of elements and do not modify the individual elements of the list.

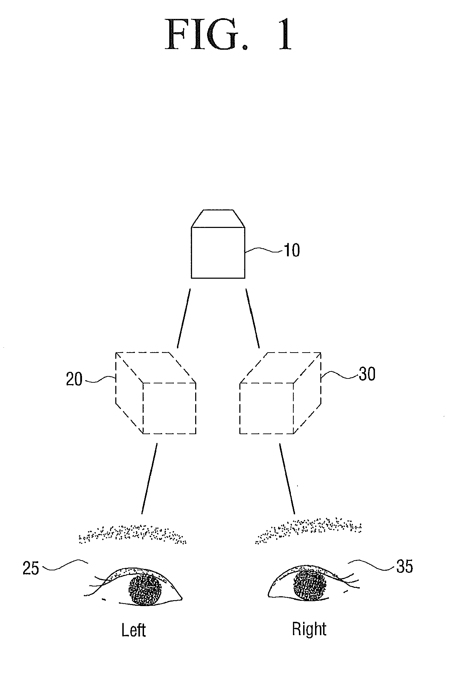

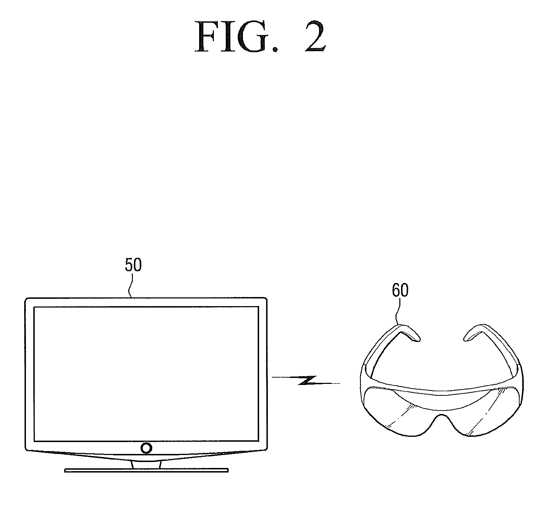

FIGs. 1 and 2 are views provided to explain a three-dimensional (3D) environment according to one or more exemplary embodiments. As illustrated in FIG. 1, when a human views an object 10, a left object 20 seen by a left eye 25 and a right object 30 seen by a right eye 35 are not consistent with each other due to the horizontal separation of the left and the right eyes 25 and 35 by about 6 to 7 cm. The left and the right eyes 25 and 35 see different two-dimensional (2D) images which are transmitted to the brain through the retina. The brain then fuses these two different images with great accuracy to reproduce the sense of a 3D image, which is referred to as a stereoscopy.

According to an exemplary technique for photographing a 3D image, two 2D images photographed by two cameras are separately generated using a binocular disparity and thus a stereoscopic image is provided on a display panel.

To realize a 3D image, a 3D image display device and 3D glasses are used. FIG. 2 is a view provided to explain a co-operation between a 3D image display device 50 and 3D glasses 60 according to an exemplary embodiment. Referring to FIG. 2, the 3D image display device 50 is capable of bi-directional communication with the3D glasses 60.

The 3D image display device 50 displays a left eye image frame and a right eye image frame alternately, and a user wearing the 3D glasses 60 alternately views the left eye image frame and the right eye image frame displayed on the 3D image display device 50. Accordingly, the user perceives a stereoscopic image.

The 3D image display device 50 and the 3D glasses 60 are synchronized with each other. In this case, if the 3D image display device 50 outputs a left eye image frame, a left eye shutter of the 3D glasses 60 opens and a right eye shutter of the 3D glasses 60 closes. If the 3D image display device 50 outputs a right eye image frame, the left eye shutter of the 3D glasses 60 closes and the right eye shutter of the 3D glasses 60 opens. Accordingly, a stereoscopic image is realized.

As described above, to realize a perfect 3D image, the 3D image display device 50 which displays the 3D image and the 3D glasses 60 which operate interactively with the 3D image display device 50 are used.

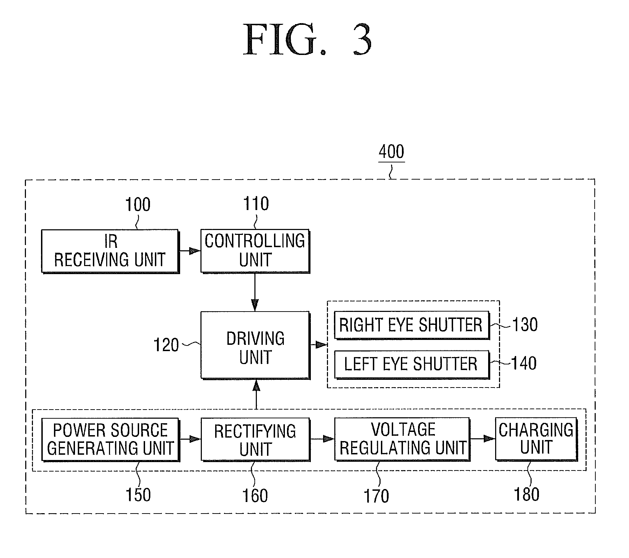

FIG. 3 is a block diagram illustrating 3D glasses 400 to which a charging method is applied according to an exemplary embodiment. Referring to FIG. 3, the 3D glasses 400 include an infrared ray (IR) receiving unit 100, a controlling unit 110, a driving unit 120, a right eye shutter 130, a left eye shutter 140, a power source generating unit 150, a rectifying unit 160, a voltage regulating unit 170, and a charging unit 180.

The IR receiving unit 100 receives an IR signal from a 3D image display device, and provides the controlling unit 110 with the received IR signal, thereby enabling the shutters 130, 140 to be driven in synchronization with the 3D image display device.

The controlling unit 110 controls the driving unit 120 based on the IR signal provided by the IR receiving unit 100. The driving unit 120 controls an open and close operation of the right and the left eye shutters 130, 140. That is, the right eye shutter 130 is opened when a right eye image frame is output from the 3D image display device, and the left eye shutter 140 is opened when a left eye image frame is output from the 3D image display device.

The power source generating unit 150 generates power based on a signal received from a remote controller (not shown). The power source generating unit 150 may be connected to an external device wirelessly to generate an induced electromotive force, like a coil or a resonator, or may be connected to an external device over wire to receive power from the external device.

The rectifying unit 160 converts the generated power from alternating current (AC) to direct current (DC). The direct current voltage (DCV) is adjusted to a specific voltage by the voltage regulating unit 170.

The charging unit 180 supplies the power regulated by the voltage regulating unit 170 to the 3D glasses 400 so that the 3D glasses 400 are charged and therefore driven.

The 3D glasses 400 according to the present exemplary embodiment includes the rectifying unit 160 and the regulating unit 170, though it is understood that another exemplary embodiment is not limited thereto. For example, according to another exemplary embodiment, the rectifying unit 160 and the regulating unit 170 may not be provided if a remote controller (not shown) which supplies power is connected to the 3D glasses 400 over wire.

Hereinbelow, a remote controller which is capable of charging the 3D glasses 400 over wire or wirelessly according to an exemplary embodiment will be explained.

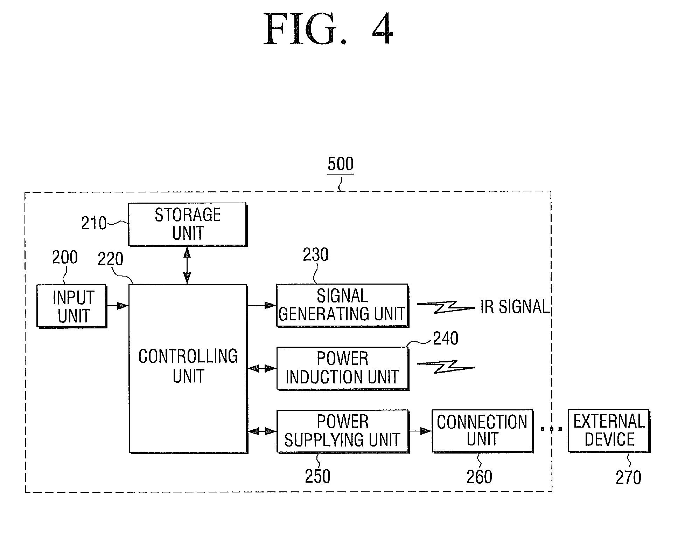

FIG. 4 is a block diagram illustrating a remote controller 500 to which a charging method is applied according to an exemplary embodiment. Referring to FIG. 4, the remote controller 500 includes an input unit 200, a storage unit 210, a controlling unit 220, a signal generating unit 230, a power induction unit 240, a power supplying unit 250, and a connection unit 260.

The input unit 200 receives an input from a user. For example, the input unit 200 may include at least one of buttons which are provided on the remote controller 500 to adjust a channel or a volume of an image display device and a touch pad which receives an input by a user's touch.

The storage unit 210 stores data used to drive the remote controller 500. For example, if a channel change occurs, the storage unit 210 may store a previous channel or a favorite channel so that a user conveniently uses the remote controller 500. Furthermore, the storage unit 210 may be external or internal, and may be a volatile storage (such as RAM) or a non-volatile storage (such as ROM, flash memory, or a hard disk drive).

The controlling unit 220 controls overall operations of the remote controller 500. For example, the controlling unit 220 controls the signal generating unit 230, the power induction unit 240, and the power supplying unit 250 in order to enable an external device 270 to be charged or the image display device to be remotely controlled.

The signal generating unit 230 generates a signal (such as an IR signal or a radio frequency (RF) signal) to remotely control the image display device. For example, the generated signal causes the image display device to change a channel or a volume.

The power induction unit 240 includes a coil or a resonator for transmission to induce the external device 270 such as 3D glasses to generate power. For example, the power induction unit 240 magnetically contacts to a coil for reception provided in the external device 270 and, thus, allows the coil for reception to generate an induced electromotive force. Furthermore, the power induction unit 240 generates a resonant wave to generate power through a resonator for reception provided in the external device 270, and induces the external device 270 to generate power.

The power supplying unit 250 supplies power to the external device 270 to be charged when the remote controller 500 is connected to the external device 270 through the connection unit 260. In this case, the external device 270 is connected to the remote controller 500 over wire, receives power from the power supply unit 250, and is charged.

The remote controller 500 may be a remote control device which controls a television (TV) or a mobile phone. Moreover, exemplary embodiments may be applied to any device which is capable of controlling a TV.

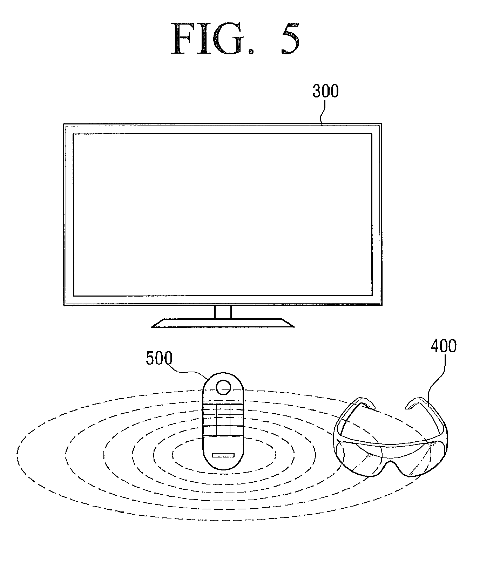

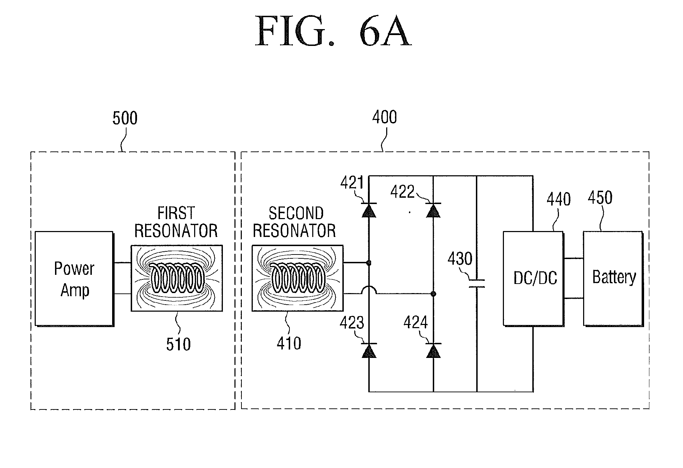

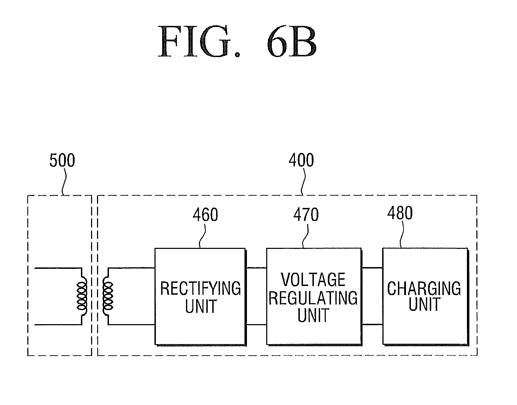

Hereinbelow, a method for connecting the power source generating unit 150 of the 3D glasses 400 to the power induction unit 240 of the remote controller 500 wirelessly and charging the 3D glasses 400 according to one or more exemplary embodiments will be explained with reference to FIGs. 5, 6A, and 6B.

FIG. 5 is a view illustrating a wireless charging system according to an exemplary embodiment. Referring to FIG. 5, the wireless charging system includes a 3D image display device 300, 3D glasses 400, and a remote controller 500.

The 3D image display device 300 is synchronized with the 3D glasses 400 and the 3D image display device 300 and the 3D glasses 400 operate interactively with each other. The remote controller 500 remotely controls the image display device 300. A user may view a 3D image wearing the 3D glasses 400 at a distance from the 3D image display device 300. Furthermore, the user may place the remote controller 500 at a distance from the 3D image device 300 to control the 3D image device 300 at any time. Therefore, the 3D glasses 400 and the remote controller 500 may be located relatively close to each other.

In this case, if the 3D glasses 400 are located within a predetermined distance from the remote controller 500, the 3D glasses 400 may be charged according to a wireless charging method. FIGs. 6A and 6B are views provided to explain a wireless charging method according to one or more exemplary embodiments.

Referring to FIG. 6A, a remote controller 500 according to an exemplary embodiment includes a first resonator 510, 3D glasses 400 according to an exemplary embodiment include a second resonator 410, and the first and the second resonators 510, 410 are connected to each other magnetically. The 3D glasses 400 are charged according to a wireless charging method.

The remote controller 500 includes a resonator for transmission, i.e., the first resonator 510 shown in FIG. 6A. The 3D glasses 400 include a resonator for reception, i.e., the second resonator 410 shown in FIG. 6A, a plurality of diodes 421, 422, 423, 424, a capacitor 430, a DC to DC converter 440, and a rechargeable battery 450.

The first resonator 510 is a resonant circuit which includes an inductor and a capacitor and has a specific resonance frequency. The resonator 510 for transmission is activated by the power supplied from a power amplifier, and generates a resonant wave having a specific resonance frequency which allows the second resonator 410 of the 3D glasses 400 to exhibit resonance. Herein, the resonant wave refers to an electromagnetic wave having a specific resonance frequency.

The second resonator 410 of the 3D glasses 400 receives the resonant wave which is generated by the first resonator 510 of the remote controller 500. In particular, the resonance frequency of the second resonator 410 corresponds to the resonance frequency of the first resonator 420, and thus the second resonator 410 is activated. For example, in this case, the second resonator 410 may be located near the arms or frames of the 3D glasses 400, though it is understood that another exemplary embodiment is not limited thereto.

The second resonator 410 responds to the resonant wave and thus generates power. Accordingly, the electric power is rectified into DC through a bridge circuit having the plurality of diodes 421, 422, 423, 424 and a rectifier circuit having the capacitor 430. The rectified voltage passes through the DC to DC converter 440 to be converted into a desired voltage, and the converted voltage is stored in the rechargeable battery 450.

While the bridge circuit and the rectifier circuit having the capacitor 430 are provided in the present exemplary embodiment, it is understood that another exemplary embodiment is not limited thereto. That is, according to another exemplary embodiment, any circuit which includes a rectifying operation may be implemented with other structures. In addition, the DC to DC converter 440 is provided to adjust the voltage in the present exemplary embodiment, but any circuit which is capable of adjusting the voltage may be implemented in another exemplary embodiment. Also, any rechargeable battery with a voltage storing capability, such as a super capacitor, may be used in another exemplary embodiment.

The 3D glasses 400 may be wirelessly charged using the resonant wave through the above process.

Referring to FIG. 6B, a remote controller 500 according to an exemplary embodiment includes a first coil, 3D glasses 400 according to an exemplary embodiment include a second coil, and the first and the second coils are connected to each other magnetically. The 3D glasses 400 are charged according to a wireless charging method.

That is, in the present exemplary embodiment, power is supplied to the first coil of the remote controller 500, and thus electric current flows in the first coil. In this case, a magnetic field is generated. Accordingly, if the second coil of the 3D glasses 400 is located in the magnetic field which is produced by the first coil, electromagnetic induction causes electricity to flow through the second coil.

That is, the first and the second coils are magnetically connected to each other, and thus the induced electromotive force occurs through the second coil. The electricity generated in the above-described manner is rectified into DC by a rectifying unit 460. The rectifying unit 460 may include diodes and capacitors which are included in a bridge circuit, such as is illustrated in FIG. 6A.

A voltage regulating unit 470 regulates the rectified voltage to be in a constant level. A charging unit 480 may be charged by the rectified DC voltage. The charging unit 480 may be implemented as a rechargeable battery or a super capacitor.

As described above, 3D glasses 400 according to one or more exemplary embodiments are charged using a remote controller 500 according to a wireless charging method described, as described above with reference to FIGs. 6A and 6B, thereby enhancing convenience of a user.

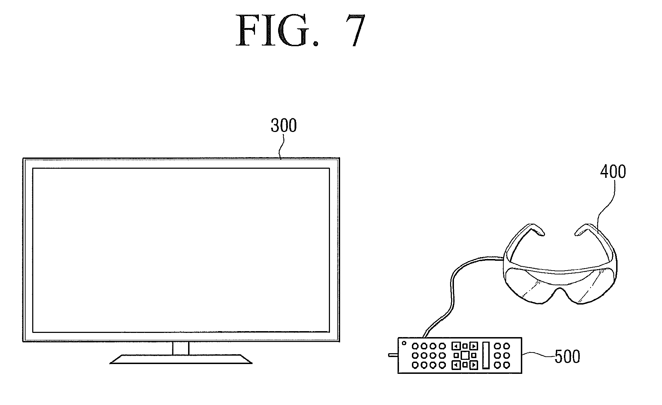

Hereinbelow, a method for charging the 3D glasses 400 which are connected to the remote controller 500 over wire according to an exemplary embodiment will be explained with reference to FIG. 7.

FIG. 7 is view illustrating 3D glasses 400 and a remote controller 500 which use a wired charging method according to an exemplary embodiment. Referring to FIG. 7, the 3D glasses 400 are located at a distance from the remote controller 500. The 3D glasses 400 which are connected to the remote controller 500 over wire may be charged by receiving power from the remote controller 500.

Specifically, the 3D glasses 400 are wiredly connected to a power supplying unit 250 of the remote controller 500 through a connection unit 260, and may store the power supplied from the power supplying unit 250 of the remote controller 500 in a charging unit 180.

Therefore, when a battery of the 3D glasses 400 is discharged while a user views a 3D image through the 3D image display device 300, the 3D image display device 300 may receive power from the remote controller 500 while being connected to the remote controller 500. Furthermore, according to an exemplary embodiment, the 3D glasses 400 may operate while the battery is being recharged by the received power.

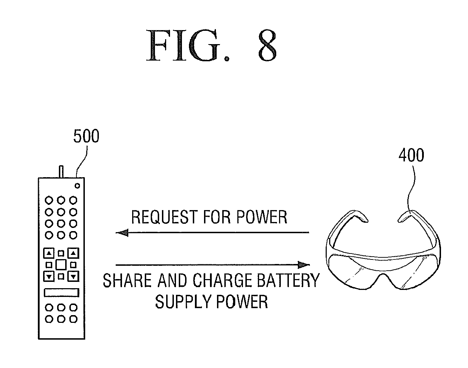

FIG. 8 is a view provided to explain a charging method according to an exemplary embodiment. Referring to FIG. 8, the 3D glasses 400 may include a determination unit (not shown) which determines a current charge state and a warning unit (not shown) which warns a user about the current charge state when the charge level of the 3D glasses 400 is below a predetermined charge level.

That is, the 3D glasses 400 determines the current charge state of the battery, and when the charge level of the battery of the 3D glasses 400 is below a predetermined charge level, the 3D glasses 400 may warn a user about the current charge state. The warning may be displayed on lenses of the 3D glasses 400 or may output a sound such as beep.

According to the warning, a user may be notified to connect the 3D glasses 400 to the remote controller 500 over wire to charge the battery of the 3D glasses 400, or use the 3D glasses 400 while being connected to the remote controller 500.

Moreover, the 3D glasses 400 may further include a signal requesting unit (not shown) which automatically requests a signal for generating power if the current charge level is below a predetermined charge level. That is, when the battery of the 3D glasses 400 is below the predetermined charge level, the signal requesting unit of the 3D glasses 400 may automatically request the remote controller 500 to transmit a signal for generating power.

The power source generating unit 150 of the 3D glasses 400 receives the signal for generating power from the remote controller 500 and generates power according to the request of the signal requesting unit. Accordingly, the battery of the 3D glasses 400 is charged through the above process.

According to the above described exemplary embodiments, 3D glasses which are chargeable over wire or wirelessly while being used, a remote controller which charges an external device operating interactively with an image display device, and a charging system which enables 3D glasses and a remote controller to operate interactively with each other are provided, thereby improving a user's convenience in viewing a 3D image.

While not restricted thereto, one or more units of the image display device 300, the 3D glasses 400, and the remote controller 500 can include a processor or microprocessor executing a computer program stored in a computer-readable medium.

The foregoing exemplary embodiments and advantages are merely exemplary and are not to be construed as limiting the exemplary embodiments. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. Three-dimensional (3D) glasses, comprising:
a power generating unit which receives a signal generated by a remote controller and generates power using the received signal; and
a charging unit which charges the 3D glasses using the generated power.

2. The 3D glasses as claimed in claim 1, wherein the power generating unit comprises a coil for reception which magnetically contacts a coil for transmission provided in the remote controller, and generates the power using an induced electromotive force generated by the coil for reception.

3. The 3D glasses as claimed in claim 1, wherein the power generating unit comprises a resonator for reception which wirelessly receives a resonant wave generated by the remote controller.

4. The 3D glasses as claimed in claim 3, wherein a resonance frequency of the resonator for reception is identical to a resonance frequency of a resonator of transmission included in the remote controller.

5. The 3D glasses as claimed in any one of the preceding claims, wherein the charging unit is a rechargeable battery or a super capacitor.

6. The 3D glasses as claimed in any one of the preceding claims, further comprising:
a voltage regulating unit which adjusts a voltage of the generated power.

7. The 3D glasses as claimed in any one of the preceding claims, further comprising:
a rectifying unit which rectifies the power generated by the power generating unit,
wherein the charging unit charges the power which is rectified by the rectifying unit.

8. The 3D glasses as claimed in any one of the preceding claims, wherein the power generating unit is wirelessly connected to a connection unit of the remote controller, and receives power from the remote controller.

9. The 3D glasses as claimed in any one of the preceding claims, further comprising:
a determination unit which determines a charge state of the 3D glasses; and
a warning unit which warns a user about the determined charge state if the determined charge state of the 3D glasses is below a predetermined charge level.

10. The 3D glasses as claimed in claim 9, wherein the warning comprises a warning which is output through a sound signal or a warning which is displayed on lenses of the 3D glasses.

11. The 3D glasses as claimed in claim 9, further comprising:
a signal requesting unit which automatically requests the remote controller to generate the signal if the determined charge state of the 3D glasses is below a predetermined charge level,
wherein the power generating unit receives the generated signal from the remote controller in response to the request.

12. The 3D glasses as claimed in any one of the preceding claims, wherein the power generating unit receives the signal generated by the remote controller while the 3D glasses operate.

13. A remote controller, comprising:
an input unit which receives a user's input to remotely control a display device;
a signal generating unit which generates a signal for remotely controlling the display device based on the user's input through the input unit; and
a power induction unit which induces an external device to generate power.

14. The remote controller as claimed in claim 13, wherein the power induction unit comprises a coil for transmission which is magnetically connected to a coil for reception provided in the external device, and allows the coil for reception provided in the external device to generate an induced electromotive force using the coil for transmission.

15. A charging system, comprising:
a remote controller according to claim 13 or claim 14, which remotely controls a display device; and
3D glasses according to any one of claims 1 to 12, which operate interactively with the display device,
wherein the remote controller generates a signal for wirelessly charging the 3D glasses, and
wherein the 3D glasses are charged by receiving the generated signal from the remote controller, generating power using the received signal, and storing the generated power.
